# EUROPEAN PATENT SPECIFICATION

(11) **EP 1 954 967 B1**
(45) Date of publication and mention of the grant of the patent: **27.03.2013**
(21) Application number: 06850468.7
(22) Date of filing: 15.11.2006
(51) Int. Cl.: F16J 15/32, F16J 15/46

(54) **SEQUENTIALLY-DEPLOYABLE LIP SEAL SYSTEMS**
SEQUENTIELL EINSETZBARE LIPPENDICHTUNGSSYSTEME
SYSTÈMES DE JOINTS À LÈVRE À DÉPLOIEMENT SÉQUENTIEL

(30) Priority: 15.11.2005 US 736927 P; 24.05.2006 US 803101 P
(43) Date of publication of application: 13.08.2008
(73) Proprietor: Ashbridge & Roseburgh Inc., Petersburg, Ontario N0B 2H0 (CA)
(72) Inventor: RAMSAY, Thomas, W., Ontario NOB 2HO (CA)
(74) Representative: Weston, Robert Dale
(86) International application number: PCT/IB2006/004245
(87) International publication number: WO 2007/119112

(56) References cited:
- EP-A1- 1 553 336
- CA-A1- 2 405 185
- GB-A- 1 104 984
- US-A1- 2003 173 746
- US-A1- 2004 007 821
- US-B1- 6 234 489

## Description

### FIELD OF THE DISCLOSURE

This disclosure relates generally to lip seals for rotating or reciprocating shafts and, more particularly, to replacement seal systems that provide sequentially-deployed lip seals which selectively engage moving elements, such as rotating and/or reciprocating shafts, through relative movement between a barrier member and the lip seal members, and to apparatus to assure deployment of the lip seals, as well as to replacement seal systems having housings to promote concentricity between the lip seal members and the moving elements and resist premature seal leakage, according to the preamble of claim 1 and as it is disclosed in US 2003 0 173 746 A.

### BACKGROUND

In operation, lip seals provided on rotating and/or reciprocating shafts of fluid- handling machinery have a limited useful life due to wear. At the end of the useful life, leakage will develop at the interface between the stationary lip seal and the rotating and/or reciprocating shaft. When leakage is observed, the operation of the fluid handling machine generally must be terminated and the sealing apparatus must be at least partially dismantled to replace the lip seal. Such dismantling and maintenance is time consuming and expensive. Additionally, there is the possibility that a significant cost in operating downtime may be suffered due to the replacement of the lip seal.

Sequentially-deployable lip seals, such as disclosed in United States Patent Specifications Nos. 6,979,002 [RAMSEY - issued 27 December 2005] and 7,059,608 [issued 13 June 2006], are designed so that, upon detection of wear or leakage of a lip seal that has been in sealing engagement with a rotating and/or reciprocating shaft, a replacement lip seal, already loaded in a ready-to-deploy condition, is deployed. In order to deploy the replacement lip seal, a barrier member or release sleeve movable relative to the yet-to-be-deployed replacement lip seal moves from a first position between the lip seal and the shaft to a second position exposing the lip seal to the shaft. In this manner, fluid-handling machinery with rotating and/or reciprocating shafts may be used continuously without having to be dismantled for seal replacement. Replacement is only necessary upon exhaustion of the useful life of all lip seals in a given assembly or cartridge of a plurality of sequentially deployable lip seals.

Due to demand for greater seal longevity, the elastomeric material from which lip seals are made, such as Polytetrafluoroethylene (PTFE or Teflon®), or Gylon® available from Garlock, Inc. of Palmyra, New York, generally resists wear and leakage. Thus, it may be months or even years before a lip seal has worn or begins leaking to the extent that a substitute lip seal needs to be deployed. Where there is more than one substitute lip seal loaded in a ready-to-deploy condition, the length of time before deployment of the subsequent lip seals is progressively longer for each successive substitute lip seal. When stored for a long period of time in the loaded, ready-to-deploy condition, the substitute lip seal(s) may resist immediate deployment, even when the trigger mechanism for releasing the lip seal, such as the barrier member or release sleeve, is moved to a position permitting deployment of the lip seal. Cold temperatures may also slow or impede immediate deployment of the substitute lip seal.

When a substitute seal does not immediately deploy, it is found that operators of the fluid handling machinery desiring prompt lip seal deployment often proceed to attempt to trigger the release or deployment of yet another substitute lip seal, and continue attempting to deploy substitute lip seals successively until one of the lip seals deploys, or until all loaded lip seals are exposed by the barrier member or release sleeve for deployment. If more than one of the triggered lip seals ultimately deploy, there may be too much resistance to rotational and/or reciprocal movement of the shaft. Another drawback of prematurely deploying successive lip seals is that the longevity of the sequentially deployable lip seal assembly or cartridge is diminished, because each lip seal is not being utilized to its full potential.

While positive process pressure in real-world applications tends to enhance deployment and improve the integrity of the sealing engagement of lip seals with rotating and/or reciprocating shafts about which they are employed, there are often situations where there is little or no pressure acting on the lip seals and shafts in a stuffing box or in other applications. For example, pressures of as little as 5 psi, 0 psi, or even negative pressure or vacuum, are not uncommon. In these situations, there is little pressure to enhance the integrity of the sealing engagement. Under vacuum conditions, the integrity of the sealing engagement may even be degraded by the negative pressure.

It would therefore be desirable for a sequentially-deployable lip seal assembly to be provided with an apparatus or mechanism for ensuring prompt deployment of the loaded, yet-to-be-deployed, lip seals upon triggering the release or deployment of each such lip seal, regardless of process pressure conditions.

The service life of an assembly or cartridge of sequentially deployable lip seals is optimized when each of the lip seals is utilized to its full potential. The rotating or reciprocating shafts on which the lip seals are deployed experience shaft deflection and vibration which may cause premature seal leakage. These conditions lead to what is referred to in the art as "shaft run out." While sequentially deployable lip seal cartridges are designed to tolerate a certain degree of shaft run out, the total indicated run out (or "TIR") can be rather small, on the order of 0.127 mm (0.005"), before seal leakage. Because users may have a tendency to initiate deployment of a next-successive lip seal upon initial detection of a leak, such premature seal leakage may result in a shorter than optimal assembly or cartridge service life.

### PRIOR ART

The above United States Patent Specification No. 6,979,002 issued on United States Patent Application Publication No. 2004/0007812A1 [Ramsey - published 15 June 2004] discloses: A sequentially-deployable lip seal assembly comprising:
i) a housing;
ii) a plurality of inwardly-directed lip seals (10) arranged along an interior of the housing;
iii) at least one spacer element, one of the at least one spacer elements separating each of the lip seals from an adjacent one of the lip seals and
iv) at least one biasing member (12) contacting a surface of one of the lip seals when the lip seal is in a loaded condition, biasing the lip seal toward a deployed position.

### STATEMENT OF INVENTION

A sequentially-deployable lip seal assembly in accordance with the present invention and embodiments thereof are defined by the appended claims.

### BRIEF DESCRIPTION OF THE SEVERAL VIEWS OF THE DRAWING

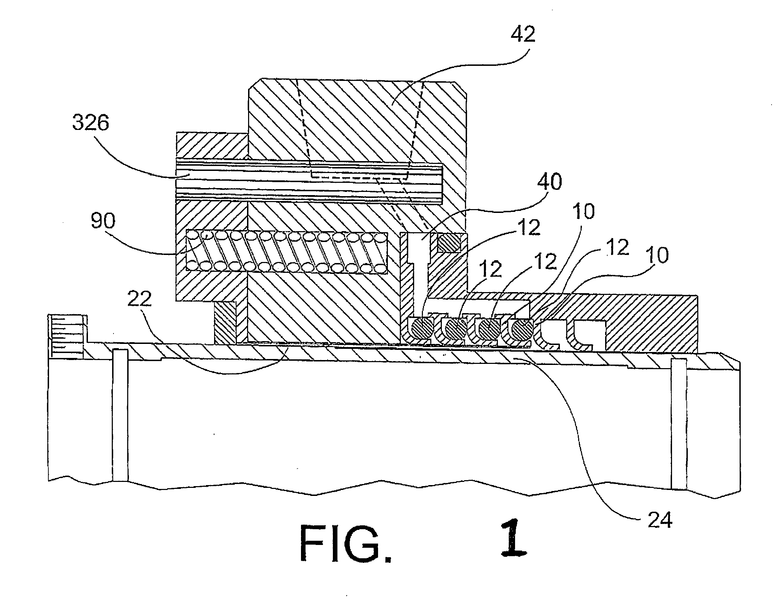

FIG. 1 is a partial side cross-sectional view of a plurality of lip seals, showing biasing members in the form of O-rings to ensure deployment of each of the lip seals, and a cavity between each of the O-rings and the housing to which a pressurized fluid is supplied via a fluid supply passage.

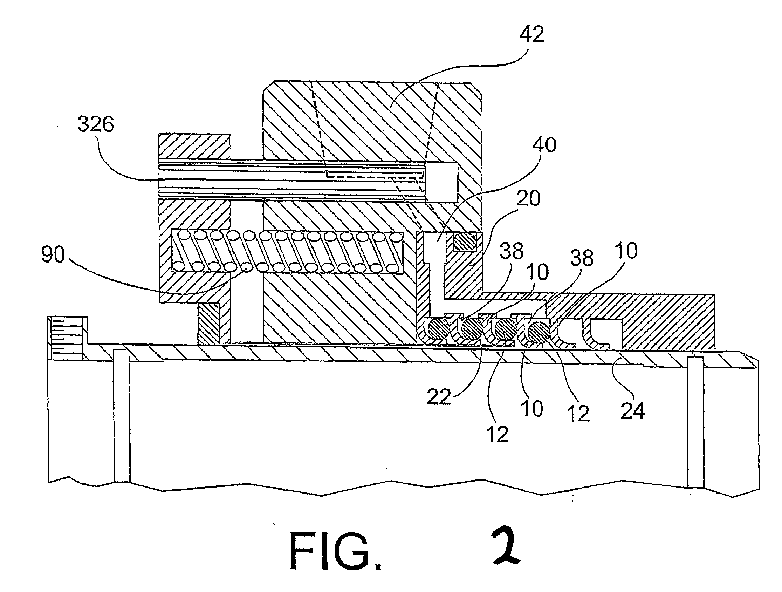

FIG. 2 is a partial side cross-sectional view similar to FIG. 1, and showing one of the lip seals which is biased toward the shaft deployed against the shaft, and showing the barrier member or release sleeve interposed between the shaft and the remaining undeployed lip seals;
FIG. 3 is a side cross-sectional view of a plurality of lip seals, showing biasing members in the form of O-rings to ensure deployment of each of the lip seals, and a cavity between each of the O-rings and the housing to which a pressurized fluid is supplied via a fluid supply passage, and a flush path to supply fluid to an area immediately adjacent the interface between the lip seals and the shaft;
FIG. 4 is a side cross-sectional view similar to FIG. 3, and showing one of the lip seals which is biased toward the shaft deployed against the shaft, and showing the barrier member or release sleeve interposed between the shaft and the remaining undeployed lip seals;
FIG. 5 is a cross-sectional view of a cartridge and gland in combination with a release sleeve and a deployment rod for controlling sequential deployment of annular lip seals loaded against an exterior of the release sleeve, and with a shaft received in the cartridge and release sleeve, with a flush path ported through the gland and cartridge;
FIG. 6 is a cross-sectional view similar- to FIG. 5, with directional arrows indicating the path of flush fluid;
FIG. 7 is a side view of the cartridge of FIG. 5, with the gland, release sleeve, and stuffing box shown in cross-section;

### DETAILED DESCRIPTION OF THE PREFERRED EMBODIMENTS

### Fluid-Enhanced O-Ring Biasing Members

A lip seal biasing member employed as an energizing device 15 takes the form of an O-ring 12. The O-rings 12 are installed between adjacent membranes that form the lip seals 10 prior to insertion of a barrier member or release sleeve 22 through the lip seal assembly. The proximity of the back surface of the lip seal 10 next-downstream to the lip seal 10 to be energized by a given biasing member, and the curvature of the front surface of the lip 10 seal to be energized, will hold the O-ring 12 in place. It may be desirable for at least an O-ring associated with a first lip seal 10 to be provided with a mounting flange (not shown), so as to hold the O- ring 12 associated with that first lip seal 10 in place, or to refrain from employing an O-ring for the most-upstream lip seal 10, because there are no additional lip seals 10 within the lip seal assembly to aid in holding such an O-ring in place.

In order to further enhance the effectiveness of the O-rings 12 in energizing the lip seals 10, once triggered, to move into sealing contact with the shaft 24, a pressurized fluid, such as grease, oil or water, could be provided in an annular cavity 38 between the housing 20 and the O-rings 12. After deployment of the lip seals 10, each of the O-rings 12 preferably maintains contact with the front surface of the associated lip seal 10. This contact provides a seal so the cavity 38 where the fluid is provided can be maintained under pressure, thereby helping to maintain sealed engagement between the lip seal 10 and the shaft 24. The pressure of the fluid may be maintained at all times, whether the lip seals 10 are stored or deployed. The fluid is preferably supplied to the annular cavities 38 by a fluid supply passageway 40 provided in the housing 20. A pressurized reservoir 42 may be provided to supply pressurized fluid to the fluid supply passageway 40.

### Flush Path

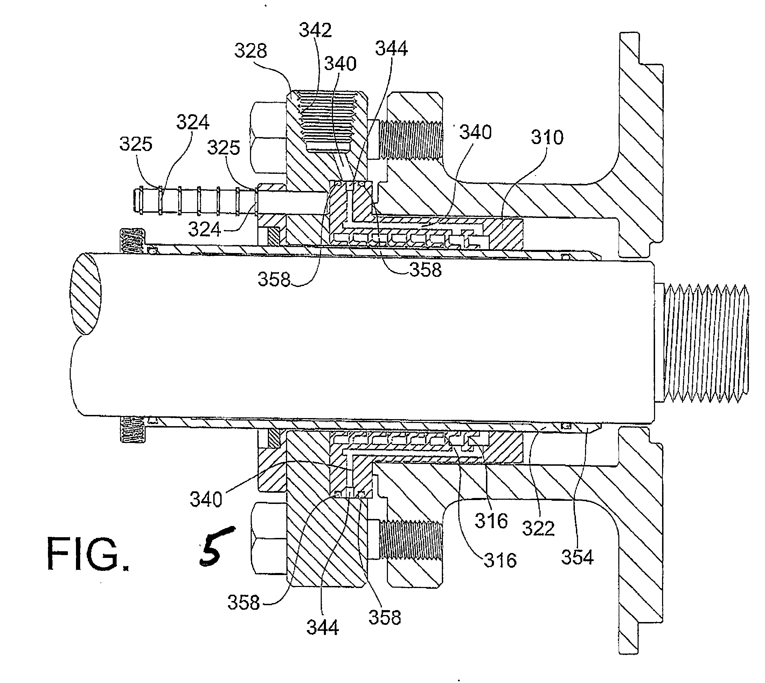

An arrangement for extending the life of a cartridge of sequentially deployable lip seals is shown in FIGS. 5-7 The gland 328 and the cartridge 310 are provided with a bored out flush path 340. The gland 328 has a threaded female port 342 for attachment of a source of fluid, such as water. The fluid to be flushed through the assembly may alternatively be a lubricant, such as grease, coolant, or other desired fluid. Shafts and seals of the nature disclosed are frequently employed in facilities where the assembly is exposed to debris, such as, by way of example only, paper mills where there is constant exposure to fibers, or other refineries or plants where there may be long term exposure to heavy granules, grains, dirt, sand, dust, or other solids or contaminants. By providing an integral flush path 340, such debris may be constantly flushed away from the sealing surface between the shaft 322 and the lip seals 316. The flush fluid may also provide beneficial cooling and lubrication to the sealing surface. The flush fluid may be introduced through the flush path 340 at a high pressure. As a result, it is ensured that whenever the flush fluid is flowing, the lip seals 316 are only exposed to clean flush fluid.

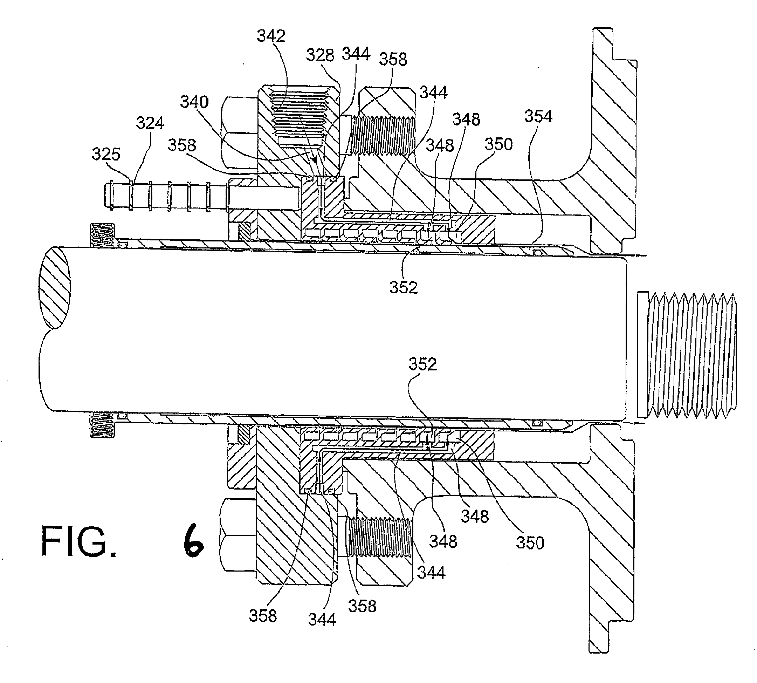

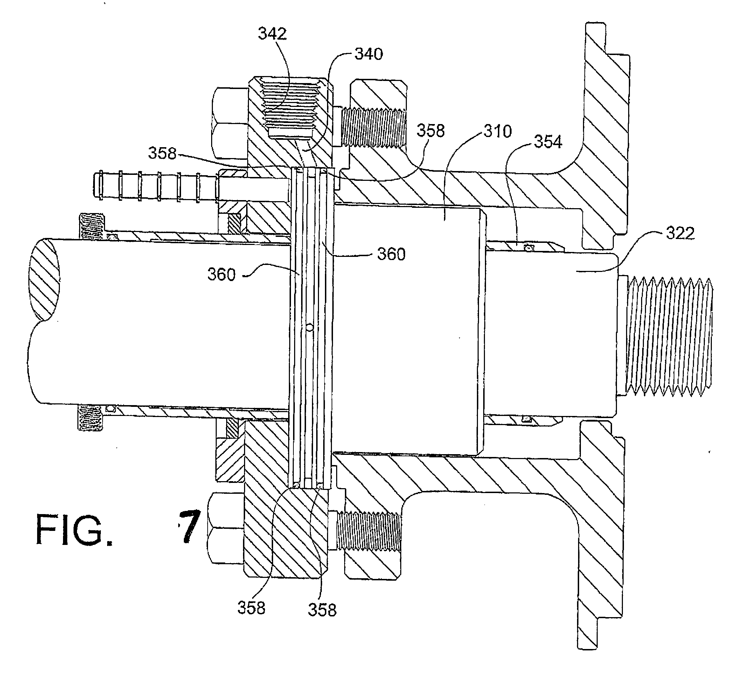

As shown in FIG. 6, the integral flush path 340 includes a single entry port in the gland 328, namely the threaded female port 342. After the flush fluid enters the gland 328, the flush fluid flows into a grooved annulus 344 of the cartridge 310 via a flush feed tube 346 provided in the gland 328. The flush fluid then flows into four holes 348 provided in the cartridge 310. Upon exiting the holes 348, the flush fluid fills first and second annular chambers 350, 352. The flush fluid finally migrates from the annular chambers 350, 352, between a shaft sleeve 354 (which may be provided about the shaft 322) and an alignment register 356, and out into the process. The flow path of the flush fluid is indicated by directional arrows in FIG. 6. A pair of O-rings 358 or sealing gaskets are preferably provided in annular gasket-receiving grooves 360 provided on the cartridge 310, as best seen in FIG. 7.

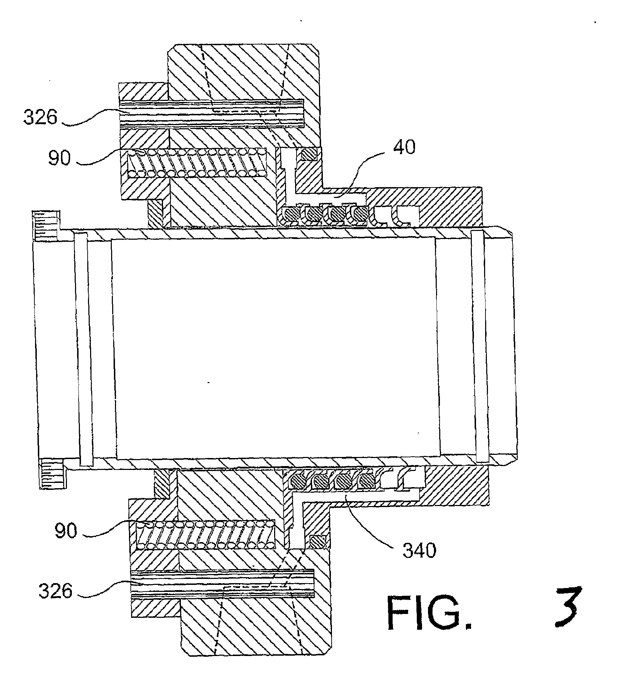

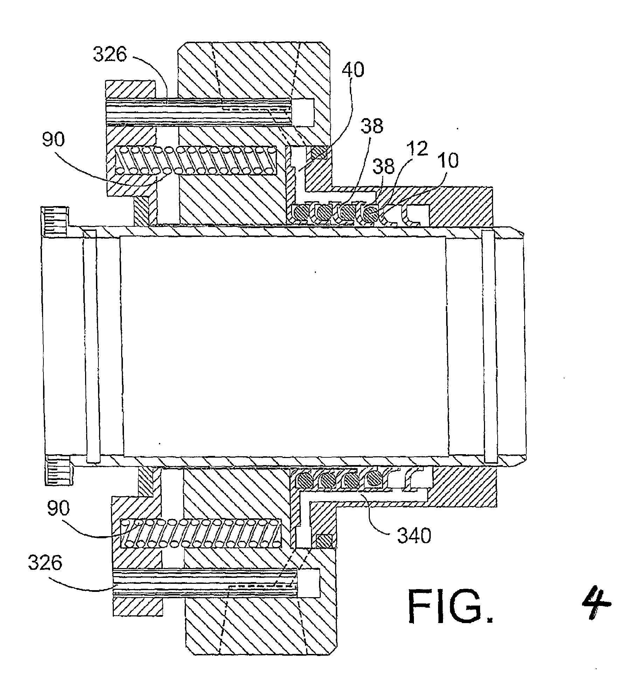

As seen in Figs. 3 and 4, both the integral flush path 340 and a fluid supply passage 40 may be provided in a single assembly. As such, pressurized fluid may be supplied via the fluid supply passage 40 to annular cavities 38 to help energize the lip seals 10, and flush fluid, pressurized or unpressurized, may be provided to an area immediately adjacent the interface between the deployed lip seals 10 and the shaft 24.

## Claims

1. A sequentially-deployable lip seal assembly comprising:
i) a housing;
ii) a plurality of inwardly-directed lip seals (10) arranged along an interior of the housing;
iii) at least one spacer element, one of the at least one spacer elements separating each of the lip seals from an adjacent one of the lip seals; and
iv) at least one biasing member (12) contacting a surface of one of the lip seals when the lip seal is in a loaded condition, biasing the lip seal toward a deployed position;
**characterized in that**:
v) each of the at least one biasing members is an O-ring (12); and
vi) the housing (16) includes at least one fluid supply passageway (40) to supply pressurized fluid in an annular cavity (38) between the at least one O-ring and the housing.

2. The sequentially-deployable lip seal assembly of claim 1, comprising an annular cavity (38) between the housing (20) and an O-ring (12); the cavity, in use, being:
i) sealed by contact of said O-ring (12) with the front surface of an associated lip seal (10) and,
ii) supplied with fluid under pressure from the fluid supply passageway (40).

3. The sequentially-deployable lip seal assembly of claim 1 or claim 2, further comprising a pressurized reservoir (42) to supply pressurized fluid to the fluid supply passageway (40).

4. The sequentially-deployable lip seal assembly of any of claims 1 to 3, wherein at least one of the O-rings (12) has an inner diameter equal to an outer diameter of the shaft (24).

5. The sequentially-deployable lip seal assembly of any of claims 1 to 4, further including a flush path (34) by which, in use, a flush fluid maybe supplied to an area immediately adjacent an interface between a deployed one of the lip seals (10) and a shaft (24) against which the lip seal is deployed.

6. The sequentially-deployable lip seal assembly of any of claims 1 to 5, further comprising a release sleeve (22) received in the housing and disposed about a shaft (24) against which the lip seals (10) are to be deployed, the release sleeve having an inner diameter greater than the shaft and an outer diameter greater than an inner diameter of each of the lip seals, and wherein each of the O-ring biasing members (12) biases the inner diameter of the adjacently-mounted lip seal in a direction toward the release sleeve.

7. The sequentially-deployable lip seal assembly of claim 6, wherein each of the biasing members O-rings (12) has an inner diameter less than a combined outer diameter of the release sleeve (22) and twice the thickness of one of the lip seals (10).

8. The sequentially-deployable lip seal assembly of any of claims 5 to 7 as dependent upon any of claims 2 to 4, wherein both the integral flush path (340) and the fluid supply passage (40) are provided in a single assembly; whereby, in use pressurized fluid may be supplied via the fluid supply passage (40) to the annular cavities (38) to help energize the lip seals (10), and flush fluid, pressurized or unpressurized, may be provided to an area immediately adjacent the interface between the deployed lip seals (10) and the shaft (24).

## Patentansprüche

1. Sequenziell einsetzbare Lippendichtungseinheit, umfassend:
i) ein Gehäuse;
ii) eine Vielzahl nach innen gerichteter Lippendichtungen (10), die längs eines Innenraums des Gehäuses angeordnet sind;
iii) mindestens ein Distanzelement, wobei eines der Distanzelemente, mindestens eins, jede der Lippendichtungen von einer benachbarten der Lippendichtungen trennt; und
iv) mindestens ein Vorspannteil (12), das mit einer Oberfläche einer der Lippendichtungen in Berührung kommt, wenn sich die Lippendichtung in einem belasteten Zustand befindet, und die Lippendichtung in eine eingesetzte Position hin vorspannt;
**dadurch gekennzeichnet, dass**:
v) jedes der Vorspannteile, mindestens eins, ein O-Ring (12) ist; und
vi) das Gehäuse (16) zumindest einen Fluidzuflussdurchgang (40) umfasst, um Druckfluid in einen ringförmigen Hohlraum (38) zwischen dem mindestens einen O-Ring und dem Gehäuse zuzuführen.

2. Sequenziell einsetzbare Lippendichtungseinheit nach Anspruch 1, umfassend einen ringförmigen Hohlraum (38) zwischen dem Gehäuse (20) und einem O-Ring (12), wobei der Hohlraum bei Verwendung:
i) durch Berührung des O-Rings (12) mit der vorderen Fläche einer dazugehörigen Lippendichtung (10) abgedichtet und
ii) mit unter Druck befindlichem Fluid von dem Fluidzuflussdurchgang (40) versorgt wird.

3. Sequenziell einsetzbare Lippendichtungseinheit nach Anspruch 1 oder 2, des Weiteren umfassend einen unter Druck befindlichen Behälter (42), um dem Fluidzuflussdurchgang (40) Druckfluid zuzuführen.

4. Sequenziell einsetzbare Lippendichtungseinheit nach einem der Ansprüche 1 bis 3, bei der zumindest einer der O-Ringe (12) einen Innendurchmesser aufweist, der einem Außendurchmesser der Welle (24) gleich ist.

5. Sequenziell einsetzbare Lippendichtungseinheit nach einem der Ansprüche 1 bis 4, des Weiteren einen Spülweg (34) umfassend, durch den bei Gebrauch einem einer Grenzfläche unmittelbar benachbarten Bereich zwischen einer eingesetzten der Lippendichtungen (10) und einer Welle (24), gegen die die Lippendichtung eingesetzt ist, ein Spülfluid zugeführt werden kann.

6. Sequenziell einsetzbare Lippendichtungseinheit nach einem der Ansprüche 1 bis 5, des Weiteren umfassend eine Auslösemuffe (22), die in dem Gehäuse aufgenommen und um eine Welle (24) herum angeordnet ist, gegen welche die Lippendichtungen (10) einzusetzen sind, wobei die Auslösemuffe einen Innendurchmesser, der größer als die Welle ist, und einen Außendurchmesser, der größer als ein Innendurchmesser jeder der Lippendichtungen ist, aufweist, und bei der jedes der O-Ring-Vorspannteile (12) den Innendurchmesser der benachbart angebrachten Lippendichtung in einer Richtung zur Auslösemuffe hin vorspannt.

7. Sequenziell einsetzbare Lippendichtungseinheit nach Anspruch 6, bei der jedes der O-Ring-Vorspannteile (12) einen Innendurchmesser aufweist, der kleiner als ein zusammengesetzter Außendurchmesser der Auslösemuffe (22) und der zweifachen Dicke einer der Lippendichtungen (10) ist.

8. Sequenziell einsetzbare Lippendichtungseinheit nach einem der Ansprüche 5 bis 7, wie von einem der Ansprüche 2 bis 4 abhängig, bei der sowohl der eine Einheit bildende Spülweg (340) als auch der Fluidzuflussdurchgang (40) in einer einzelnen Einheit vorgesehen sind; wodurch bei Verwendung über den Fluidzuflussdurchgang (40) Druckfluid in die ringförmigen Hohlräume (38) zugeführt werden kann, um das Aktivieren der Lippendichtungen (10) zu unterstützen, und unter Druck oder nicht unter Druck befindliches Spülfluid einem der Grenzfläche unmittelbar benachbarten Bereich zwischen den eingesetzten Lippendichtungen (10) und der Welle (24) zugeführt werden kann.

## Revendications

1. Ensemble de joints à lèvre à déploiement séquentiel, comprenant :
i) un boîtier ;
ii) une pluralité de joints à lèvre dirigés vers l'intérieur (10) disposés le long d'un intérieur du boîtier ;
iii) au moins un élément d'espacement, l'un des au moins un élément d'espacement séparant chacun des joints à lèvre d'un joint adjacent parmi les joints à lèvre ; et
iv) au moins un organe de rappel (12) en contact avec une surface de l'un des joints à lèvre lorsque le joint à lèvre est dans un état sollicité, rappelant le joint à lèvre vers une position déployée ;
**caractérisé en ce que** :
v) chacun des au moins un élément de rappel est un joint torique (12) ;
et
vi) le boîtier (16) inclut au moins un passage de fourniture de fluide (40) pour fournir du fluide mis sous pression dans une cavité annulaire (38) entre le au moins un joint torique et le boîtier.

2. Ensemble de joints à lèvre à déploiement séquentiel selon la revendication 1, comprenant une cavité annulaire (38) entre le boîtier (20) et un joint torique (12) ; la cavité, en service, étant :
i) rendue étanche par un contact dudit joint torique (12) avec la surface avant d'un joint à lèvre (10) associé et,
ii) alimentée en fluide sous pression provenant du passage de fourniture de fluide (40).

3. Ensemble de joints à lèvre à déploiement séquentiel selon la revendication 1 ou la revendication 2, comprenant en outre un réservoir sous pression (42) pour fournir du fluide sous pression au passage de fourniture de fluide (40).

4. Ensemble de joints à lèvre à déploiement séquentiel selon l'une quelconque des revendications 1 à 3, dans lequel au moins un des joints toriques (12) a un diamètre intérieur égal à un diamètre extérieur de l'arbre (24).

5. Ensemble de joints à lèvre à déploiement séquentiel selon l'une quelconque des revendications 1 à 4, incluant en outre un trajet de rinçage (34) par lequel, en service, un fluide de rinçage peut être fourni à une zone immédiatement adjacente à une interface entre un joint déployé parmi les joints à lèvre (10) et un arbre (24) contre lequel le joint à lèvre est déployé.

6. Ensemble de joints à lèvre à déploiement séquentiel selon l'une quelconque des revendications 1 à 5, comprenant en outre un manchon de libération (22) reçu dans le boîtier et disposé autour d'un arbre (24) contre lequel les joints à lèvre (10) doivent être déployés, le manchon de libération ayant un diamètre intérieur supérieur à l'arbre et un diamètre extérieur supérieur à un diamètre intérieur de chacun des joints à lèvre, et dans lequel chacun des organes de rappel en forme de joint torique (12) rappelle le diamètre intérieur du joint à lèvre monté de manière adjacente dans une direction vers le manchon de libération.

7. Ensemble de joints à lèvre à déploiement séquentiel selon la revendication 6, dans lequel chacun des organes de rappel en forme de joints toriques (12) a un diamètre intérieur inférieur à un diamètre extérieur combiné du joint de la douille de libération (22) et égal au double de l'épaisseur de l'un des joints à lèvre (10).

8. Ensemble de joints à lèvre à déploiement séquentiel selon l'une quelconque des revendications 5 à 7, lorsque dépendante de l'une quelconque des revendications 2 à 4, dans lequel à la fois le trajet de rinçage monobloc (340) et le passage de fourniture de fluide (40) sont prévus dans un seul ensemble ; en sorte que, en service, du fluide sous pression peut être fourni via le passage de fourniture de fluide (40) aux cavités annulaires (38) pour aider à activer les joints à lèvre (10), et du fluide de rinçage, sous pression ou non sous pression, peut être fourni à une zone immédiatement adjacente à l'interface entre les joints à lèvre déployés (10) et l'arbre (24).
